# EUROPEAN PATENT APPLICATION

(11) **EP 2 390 834 A1**
(43) Date of publication of application: **30.11.2011**
(21) Application number: 11178932.7
(22) Date of filing: 11.04.2005
(51) Int. Cl.: G06Q 99/00, G06Q 40/00

(54) **Systems and methods for data insurance**

(62) Divisional of application: 05735822.8
(71) Applicant: Lahrip Pty Ltd. Trustee for the Hodgkiss Family Trust, Melbourne 3000 (AU); Conn, John Paul, San Marino, CA 91108 (US); O'Brien, Thomas John, Carlsbad, CA 92008 (US); Lake-Johns, Peter Kingsley, 41462 Neuss (DE)
(72) Inventor: Conn, John Paul, San Marino, CA California 91108 (US); O'Brien, Thomas John, Carlsbad, CA California 92008 (US); Lake-Johns, Peter Kingsley, 41462 Neuss (DE); Hodgkiss, Gregory Hugh, Victoria, Victoria 3097 (AU)
(74) Representative: Jennings, Nigel Robin

(57) **Abstract**

An agreement is created between a first entity and a second entity under which the second entity agrees to provide data protection services for use by a third entity. A backup copy of the third entity's data is created and maintained at a location controlled by the second entity. If the third entity suffers a data loss, a replacement copy of the data is generated from the backup copy. The first entity provides compensation for the second entity's efforts to restore the third entity's lost data. If the second entity is unable to restore the data, the third entity is compensated for its data loss.

## Description

The present invention relates generally to methods and systems for restoring electronic data after a loss of such data and more specifically to methods and systems for compensating data owners and data backup service providers for the costs of restoring data after a loss of data.

Electronic data are stored on a wide variety of storage media including electronic disks, hard drives, and tapes, and other media. Data stored on any of these media may be lost for any number of reasons, including physical damage to the storage media in disasters such as fire, tornados, earthquakes, or terrorism. Data may also be lost when storage media or associated computer systems fail after prolonged use. Data may also be lost inadvertently through user error.

It has been standard practice for some time to make periodic "backup" copies of stored data to mitigate financial and similar harm caused by data loss. When data are lost, they may be restored from the backup copy thereby minimizing disruptions to the data owner's business or other activities that would otherwise result from the loss of the data.

A backup copy may be made by the data's owner and stored at or near the location at which the original data storage media are located. This is obviously risky, though, in that a single catastrophic event such as a fire or tornado may easily destroy not only the original stored data but the backup copy as well.

Backup copies are often stored, therefore, at a location remote from the media that hold the original data. This, though, can create logistical and transportation difficulties, particularly where backup copies have to be physically moved from the original storage site to the backup copies' remote storage location.

Methods have been developed in which copies of the electronic data are transmitted electronically (using a modem or over the Internet, for example) and archived as backup copies at a remote location. In the event data are lost at the original storage site, the data can be recreated from a backup copy. The backup data can be transferred back to the original location by substantially the same means by which the data were initially transmitted to the remote location for backup. Such methods substantially reduce the inconvenience that arises when physical storage media are shipped or otherwise physically transported from the original data storage location to the remote backup locations.

Existing methods for electronic transfer and remote storage of backup copies are still less than ideal, though. When data are lost at the original location, costs are necessarily incurred in retrieving the data from the remote location's backup copy and transferring it back to the original site. These costs may include, for example, technicians' time and the costs of restoring physical storage media that may have been damaged at the original site.

In other cases, it may be impossible to fully restore the lost data from a backup copy. The remotely located backup copy may not be current, for example, or the backup copy may never have been properly created, it may itself have become damaged or corrupted, or it may otherwise be incomplete or unavailable to restore the original data. In that case, the owner of the data may naturally incur further losses and inconvenience from the unavailability of a complete backup copy to restore the lost data.

It would be advantageous, therefore, if improved methods and systems were devised to protect data owners out of losses or inconvenience incurred in restoring lost data from backup copies at remote locations, and for other losses and inconvenience that might arise in the event the lost data could not be restored. The inventions described in this document satisfy those objectives.

### SUMMARY OF THE INVENTION

A method for providing data insurance includes the creation of an agreement between a first entity and a second entity under which the second entity agrees to provide data protection services for use by a third entity. An insurance agreement is also created, under which the third entity is authorized to use the second entity's data protection service. The insurance agreement may specify the type or level of services that the third entity is required to use. In some embodiments, the second entity provides a data backup service in which a backup copy of the third entity's data is created and maintained at a location controlled by the second entity. If the third entity suffers as data loss, a further copy of the data is generated from the backup copy. Compensation will then be provided for the second entity's services in attempting to restore the lost data from the backup copy. If the second entity cannot restore the data, compensation may be paid to the third entity for its lost data. The first entity may also pay the second entity for providing data protection services to the third entity. The first entity may, moreover elect not to charge the third entity any special premium or additional charge for providing the data protection service, beyond the usual premium that the first entity would ordinarily charge for providing its insurance without the provision of the data protection services.

The invention thus can provide a system under which a data owner is protected against expenses it might incur to restore lost data and other losses that might follow a loss of the data owner's data. In some embodiments, the insured is not charged for the data protection services, the service provider instead being compensated by the insurer. In other embodiments the insured purchases the data protection service directly from the provider, but the insurer discounts the premium it would ordinarily charge for insuring the insured against losses arising from loss of its data. In still other embodiments, the data protection service provider may pay the insurer for requiring the use of its services, or the provider may agree to provide its services to the insurer's insured at a price that is discounted in comparison to what the provider would normally charge for services of that type.

### BRIEF DESCRIPTION OF DRAWINGS

The following discussion may be best understood with reference to the various drawings, which form a part of this disclosure.
FIG. 1 is a flow chart illustrating data insurance methods according to embodiments of the invention.
FIG. 2 is a block diagram further illustrating the methods of FIG. 1.
FIG. 3 is a flow chart illustrating data insurance methods according to alternative embodiments.
FIG. 4 is a block diagram further illustrating the methods of FIG. 3.
FIG. 5 is a block diagram that illustrates other alternative embodiments.

### DETAILED DESCRIPTION OF THE PREFERRED EMBODIMENTS

The invention is described here with reference to the accompanying drawings, in which preferred embodiments of the invention are shown. The invention may, however, be embodied in many different forms and should not be construed as limited to these examples.

When an element such as a block or unit is shown in the figures connected to another element, it can be directly connected to the other element or intervening elements may also be present. Terms such as "entity" and "data protection service" can include one or more of the indicated element.

"Data" includes any information that has value to its owner. "Insurance" is a financial arrangement for redistributing the costs of unexpected losses according to a contract in which an insurer agrees to compensate an insured for those losses. A "loss" is an undesired, unplanned reduction in economic value. "Data loss" can include, for example, events in which no current copy of the data exists, or events in which only a partial but possibly or certainly corrupted copy of the data is available.

A "data protection service" can include data protection tools and techniques for reproducing information. These can include functions such as copying data and maintaining backups of data at previous times and dates. Data protection services can also include other protective services such as virus scanning. Particular data protection services might include local data mirroring, remote data mirroring, operating-system-supported data object replication, or file-by-file data archiving, and these might be supplemented by virus scanning or other data protection services. Such data protection services may be provided at a single facility or at a plurality of facilities, locally at the data owner's site, or remotely at another location.

The data insurance methods and systems described here can apply in situations where a first entity insures a third entity via an insurance agreement. The first entity may purchase a data protection service from a second entity for use by customers of the first entity. Insurance agreements according to these methods can provide insurance to the third entity and include, among other things, provisions for providing data insurance to protect against economic losses arising out of the insured's loss of data.

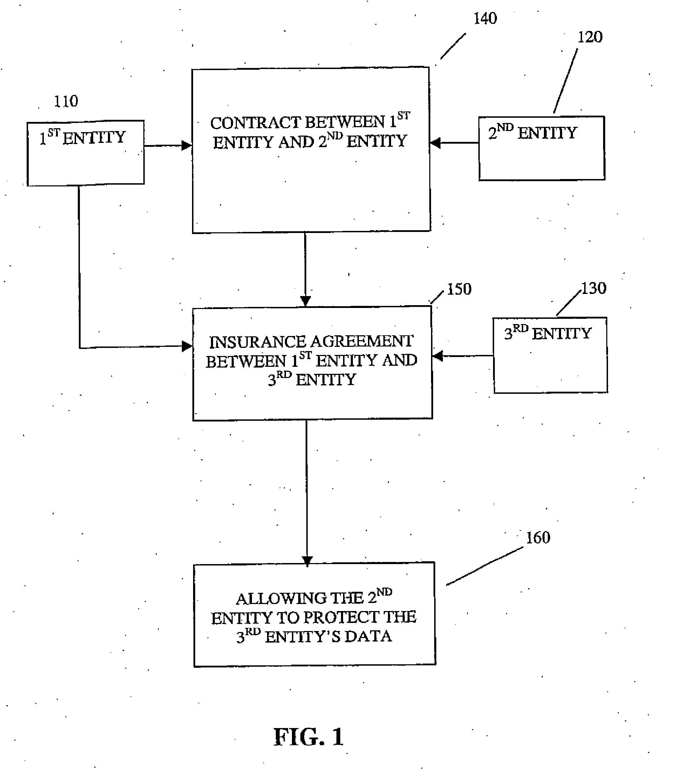

FIG. 1 is a flow chart illustrating a data insurance method. Block 140 represents a contract between a first entity 110 and a second entity 120. This contract can include an agreement obligating then second entity to provide data protection services to a third entity 130. The second entity could, for example, create a backup copy of the third entity's data and retain it at the second entity's location. If the third entity's data is lost, the second entity can restore the data from the backup copy. The second entity may provide an online data backup service in which the third entity's data is transmitted to a location controlled by the second entity over the Internet, a private network or similar means for copying and backup by the second entity. Virtual Backup, Inc. is a provider of such services.

Block 150 represents an insurance agreement between the first entity 110 and the third entity 130. The insurance agreement obligates the first entity 110 to insure the third entity against losses to the third entity's data. The insurance agreement permits, and may require, the third entity to use the data protection service provided by the second entity 120. The insurance agreement might, for example, require the third entity to install, set up, and use the data protection services. Recovery under the policy can be made contingent, in whole or in part, on the third entity's compliance with these requirements. If, for example, the third party fails to use or fails properly to cooperate in the use of the data protection services, then the third party's recovery under the policy might be eliminated or reduced. Block 160 represents the second entity's provision of data protection services to protect the third entity's data.

The first entity 110 insures the third entity 130 against losses arising from its loss of data. The first entity pays or otherwise compensates the second entity 120 for its data protection services. The third entity's use of the data protection services can be made a condition of the insurance policy. The first entity insurer will not make good the third entity's losses unless the third entity has used the second entity's data protection services as required.

When the third entity suffers a loss of data, the first entity will compensate the third entity, for that loss. That compensation can take several forms. The insurance contract between the first and third entities may, for example, require the third entity to pay the second entity for a technician's time or other expenses incurred in connection with the second entity's efforts to restore the third entity's data, from a backup copy stored at the second entity's facility or otherwise as described in this document.

A contract might be structured to provide for both replacement of damaged or destroyed hardware and lost data. After an incident resulting in damaged hardware and lost data, the insurance contract between the first and third entities might, for example, require the first entity to pay the second entity to place a copy of the third entity's data on new computer hardware and deliver that hardware to the third entity's office, place of business, or another location controlled by the third entity. The third entity's data can be placed onto the new hardware from a backup copy stored at a location controlled by the second entity, or otherwise as described in this document.

Some contracts might specify that, in the event the data cannot be restored from a backup copy, the first entity will pay to have the third entity's data restored by another method. The first entity may be obligated, for example, to pay the expenses incurred in having the third entity's data reconstructed from paper records or other alternate storage means to replace the lost computer data.

If the data cannot be restored either from a backup copy, paper records, or any other alternative means, then the insurance policy may provide for a payment from the first entity to the third entity. The payment might be in an amount agreed upon between the parties at the time of the contract and stipulated between them in the contract.

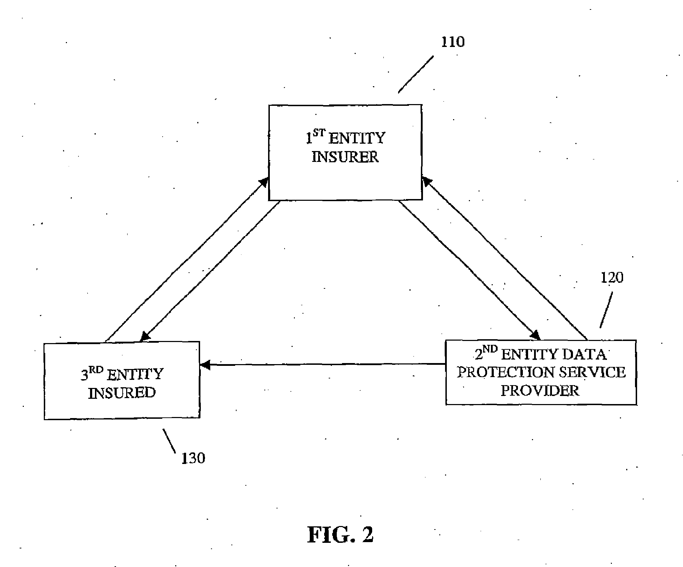

FIG. 2 illustrates a data insurance system. The arrow extending from the first entity insurer 110 to the third entity insured 120 represents insurance provided by the first entity, and in particular, compensation paid by the first entity to the third entity for data loss. The arrow that extends back from the third entity insured to the first entity insurer represents the premium or other compensation paid by the insured in return for the insurance.

The arrow extending from the second entity data protection service 120 to the first entity insurer 110 represents the data protection service's agreement with the insurer to allow the third entity insured 130 to use the data protection service. In essence, the first entity insurer 110 purchases data protection services on behalf of its insured customers. This can be viewed as the purchase of a license for the benefit of the third entity insured, and this license is represented by the arrow from the second entity data protection service to the third entity insured. The first entity insurance provider 110 compensates the second entity 120 for providing the data protection service to the insured 130. This compensation is represented by the arrow from the first entity insurer to the data protection service.

Significantly, there is no arrow in this figure from the third entity insured 130 to the second entity data protection service 120. The third entity does not make any separate payment to the data protection service for the use of its service. Provision of such services is part of the third entity's agreement with its insurer, and payment for the services is from the insurer to the service provider.

With conventional data insurance plans, the insured may or may not purchase data protection services. Many insureds will forgo the extra expense of acquiring such services; others may cut costs by contracting with services of dubious quality or effectiveness. Even when an insured does purchase data protection services, the insured may not take all of the steps required - such as installing required software, using it as directed, or making backups at the recommended frequency - to use the service effectively.

In the scheme described here, though, the insured 130 does not pay anything directly to the data protection service provider 120, and the insurer 110 typically will not charge any additional or special premium in exchange for the insurer's arranging for the data protection service. The insured, moreover, can be required by the terms of the policy to cooperate with the service to install, maintain, and use the data protection service to provide the specified protection for the data. If the insured fails to do what is required, recovery may be denied by the insurer in the event of data loss.

An insured thus has a very substantial incentive to maintain and use the data protection service. By increasing the number of insureds that use the data protection service, and by ensuring that the data protection service provides a service of acceptable quality, the insurance provider can expect to reduce the amounts it must pay out in claims for data loss.

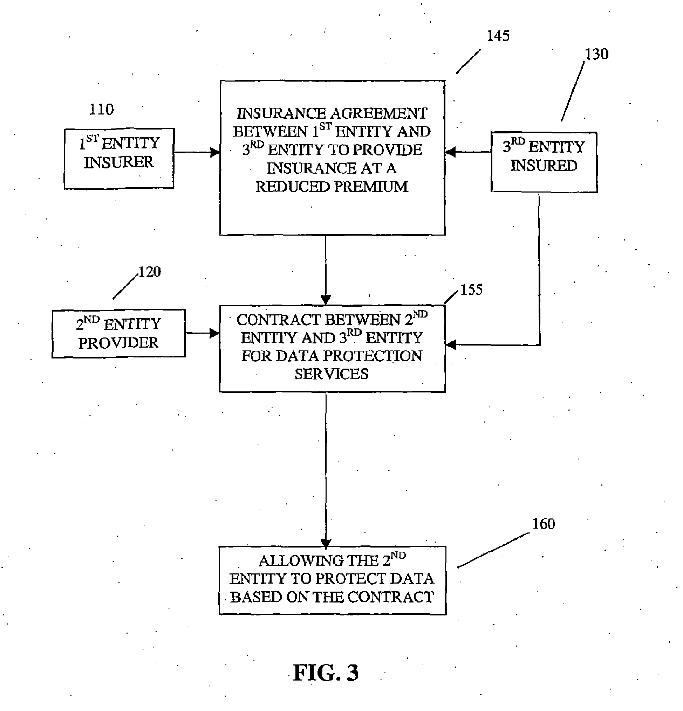

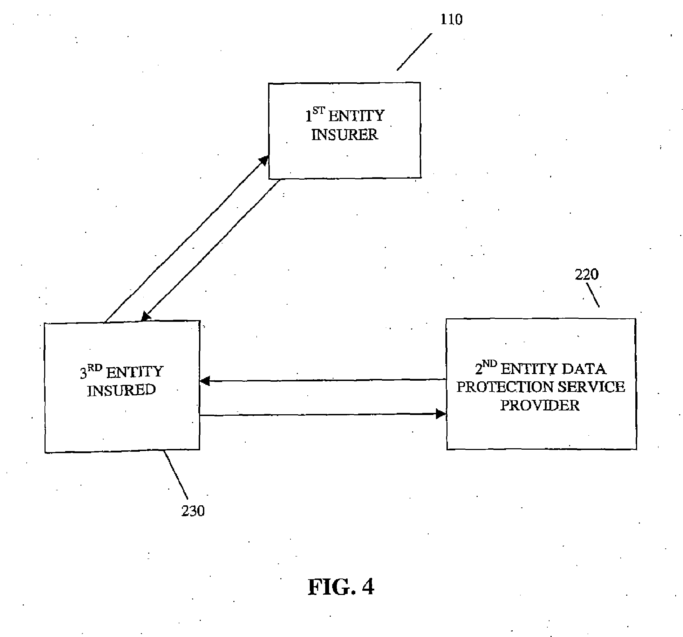

FIGS. 3 and 4 illustrate a variant in which an "offset method" is utilized to pay for the data protection services. In this method, the first entity insurer 110 (see FIG. 3) provides insurance 145 to the third entity insured 130 for a premium that is reduced in comparison with the premium ordinarily charged for the same level of insurance. To qualify for the reduced premium, the third entity 130 must agree to purchase data protection services 160 - the agreement between the third entity insured and the second entity data protection service provider 120 being represented by block 155 in FIG. 3. Though the third entity must pay the second entity for the data protection services, the third entity's expense in doing so can be offset by the reduced insurance premium charged by the first entity insurer.

In FIG. 4, the arrow from the first entity insurer 110 to the third entity insured 130 represents the insurance provided by the insurer to the third entity. The arrow from the insured to the insurer represents the premium the third entity pays to purchase the insurance. This premium is reduced in comparison with what the insurer would normally have charged for the insurance. The reduced premium is typically offered on the condition that the third entity purchase data protection services from a second entity data protection service provider 120. The identity of the provider and the type and degree of data protection services may be specified in the insurance agreement.

The purchase by the third entity insured 130 of data protection services from the data protection service provider 120 is illustrated in FIG. 4. The arrow from the second entity data protection service provider to the third entity insured represents the provision of the data protection services by the provider. The arrow from the insured to the service provider represents the insured's payment for those services.

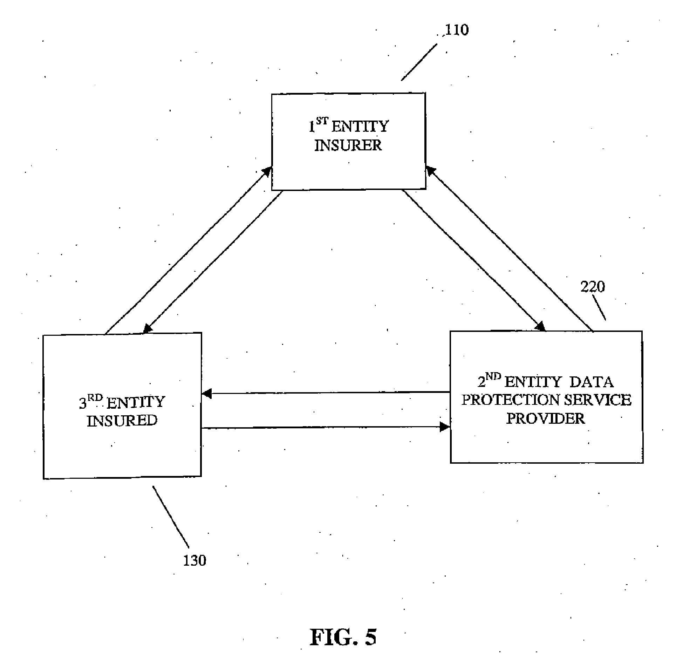

FIG. 5 illustrates another variant. This method includes the same elements as those of the variant illustrated in FIGS. 3 and 4. This variant, though, includes a further agreement between the first entity insurer 110 and the second entity data protection service provider 120. In FIG. 5, the arrow from the first entity insurer to the second entity data protection service provider represents a promise by the insurer to include in its policies a provision requiring its insureds to purchase data protection services from that provider. The arrow from the service provider to the insurer represents a promise by the provider to pay the insurer money or other compensation for requiring use of the provider's services, or to provide its services to the insurer's insured at a discount to what it would normally charge for the same level of service.

While aspects of the invention have been described in terms of certain preferred embodiments, those of ordinary skill in the art will appreciate that various changes and additions might be made without varying from the basic principles of the invention. Aspects of the present invention can be implemented in a variety of implementations, and are not limited to any one particular implementation. Moreover, although the aspects of the invention described herein are described with reference to a first entity insurer, a second entity data protection service, and a third entity insured, the parties to the methods described here need not be formally denominated as such, so long as they act as described in the appended claims. The invention could also be embodied in insurance models in which other parties are present that act as brokers, agents, contractors, vendors, or other intermediaries in transactions between an insurer, an insured, and a data protection service provider. The inventions are thus not limited to the specific and exemplary embodiments described in this document. The scope of the invention should instead be determined from the appended claims, including the full scope of equivalents to which those claims are legally entitled.

## Claims

1. A method for providing data insurance comprising:
storing, by a first processing device, data of a third entity on a storage medium of the third entity;
creating an agreement between a first entity and a second entity to provide data protection service to a third entity, wherein the first entity arranges for a data protection service to be provided by the second entity for the third entity's data stored on a storage medium of the third entity;
creating an insurance agreement between the first entity and the third entity, because the data of the third entity was stored on the storage medium of the third entity, that authorizes the third entity to use the data protection service provided by the second entity for the third entity's data stored on the storage medium of the third entity without the third entity being charged for use of the data protection service of the second entity;
storing, by a second processing device, an electronic backup copy of the third entity's data, as required by the data protection service agreement, on a storage medium of the second entity such that the electronic backup copy of the third entity's data stored on the storage medium of the second entity is insured against loss according to the insurance agreement;
upon loss of data stored on the storage medium of the third entity, providing the backup copy of data from the second entity to the third entity in an attempt to restore the third entity's data;
providing compensation from the first entity to the second entity for the data protection services; and
providing compensation from the first entity to restore the third entity's data from an alternate source in the event the second entity cannot successfully restore the third entity's data from an electronic backup copy.

2. The method of claim 1 further comprising providing compensation to the third entity if the second entity is unable to restore the third entity's lost data.

3. The method of claim 2, wherein the compensation provided to the third entity if the second entity is unable to restore the third entity's lost data is specified in the insurance agreement.

4. The method of claim 1, wherein the insurance agreement requires the third entity to use the data protection service provided by the second entity.

5. The method of claim 1, wherein the first entity's insurance of the third entity against losses arising out of data loss is at least partially contingent upon the third entity's using predetermined services provided by the second entity.

6. The method of claim 1, wherein the data protection service is a data backup service, and further comprising:
storing the electronic backup copy of the third entity's data while at a location controlled by the second entity; and
generating, after a loss of the third entity's data, a further copy of the third entity's data from the backup copy.

7. A method for providing data insurance comprising:
storing, by a first processing device, data of a third entity on a physical storage medium of the third entity;
creating an agreement between a first entity and a second entity to provide electronic data protection service to the third entity, wherein the first entity arranges for a data protection service to be provided by the second entity for the third entity's data stored on the physical storage medium of the third entity;
creating an insurance agreement between the first entity and the third entity, because the data of the third entity was stored on the physical storage medium of the third entity, that authorizes the third entity to use the electronic data protection service provided by the second entity for the third entity's data stored on the physical storage medium of the third entity without the first entity and the second entity charging the third entity for use of the electronic data protection service of the second entity;
storing, by a second processing device, an electronic backup copy of the third entity's data, as required by the data protection service agreement, on a storage medium of the second entity such that the electronic backup copy of the third entity's data stored on the storage medium of the second entity is insured against loss according to the insurance agreement; and
upon loss of data stored on the physical storage medium of the third entity, attempting to deliver to the third entity the electronic backup copy.

8. The method of claim 7, wherein the insurance agreement requires the third entity to use the data protection service provided by the second entity.

9. The method of claim 7, wherein the first entity's insurance of the third entity against losses arising out of data loss is at least partially contingent upon the third entity's using predetermined services provided by the second entity.

10. The method of claim 7, wherein the data protection service is a data backup service, and further comprising:
wherein the backup copy of the third entity's data is stored while at a location controlled by the second entity; and
generating the restored copy of the third entity's data from the backup copy.

11. An insurance system comprising:
a data protection service provider that provides data protection services to an insurer for use by the insurer's insured and that has a processing device configured to store an electronic backup of the insured's data on a storage medium;
wherein the data protection services are acquired by the insurer and used by the insured that is insured by the insurer against losses arising out of lost data from the electronic backup copy of the insured's data based on an insurance agreement between the insurer and the insured created because the insured's data was stored on a storage medium and without the insurer and the data protection service provider charging for the use of the data protection service of the data protection service provider;
wherein following a loss of data by the insured, the data protection service provider is obligated to attempt to restore the insured's data; and
wherein the data protection service provider is compensated by the insurer for its efforts to restore the insured's data.

12. The insurance system of claim 11, wherein the insurer's insurance of the insured against losses arising out of data loss is at least partially contingent upon the insured using predetermined services provided by the data protection service provider.

13. The insurance system of claim 11, wherein the electronic backup copy of the insured's data is stored while at a location controlled by the data protection service provider and wherein the data protection service provider's attempts to restore the insured's lost data include attempting to generate a further copy of the insured's data from the backup copy.

14. A method for providing data insurance and protecting data, the method comprising:
storing, by a first processing device, data of an insured on a storage medium of the insured;
creating an insurance agreement between an insurer and the insured because the data of the insured was stored on the storage medium of the insured, wherein the insurance agreement provides that the insurer will insure the insured for losses arising out of lost data stored on the storage medium of the insured, and wherein the insurance agreement requires the insured to use a data protection service provided by a data protection service provider;
creating a data protection service agreement between the insured and the data protection service provider, wherein the data protection service agreement provides that the data protection service provider will provide a data protection service for the insured's data stored on the storage medium of the insured without the insurer and the data protection service provider charging the insured for the use of the data protection service of the data protection service provider;
storing, by a second processing device, an electronic backup copy of the insured's data, as required by the data protection service agreement, on a storage medium of the data protection service provider such that the electronic backup copy of the insured's data stored on the storage medium of the data protection service provider is insured against loss according to the agreements; and
upon loss of data by the insured, providing the backup copy data from the storage medium of the data protection service provider to the insured in an attempt to restore the insured's data.

15. The method of claim 14, wherein the backup copy of the insured's data is stored while at a location controlled by the data protection service provider, further comprising generating, after a loss of data by the insured, a further copy of the insured's data from the backup copy.
